# FASCICULE DE BREVET EUROPEEN

(11) **EP 2 143 929 B1**
(45) Date de publication et mention de la délivrance du brevet: **28.09.2011**
(21) Numéro de dépôt: 09164991.3
(22) Date de dépôt: 09.07.2009
(51) Int. Cl.: F02K 9/52, F02K 9/58, F02K 9/94

(54) **Motor-fusée comprenant un dispositif d'injection de monoergol à débit modulable avec vitesse d'injection stable**
Raketentriebwerk umfassend eine Einspritzvorrichtung für Monergol mit modulierbarem Durchfluss und stabiler Einspritzgeschwindigkeit
Rocket engine comprising a monopropellant injection device with flow modulation and stable injection speed

(30) Priorité: 11.07.2008 FR 0854778
(43) Date de publication de la demande: 13.01.2010
(73) Titulaire: SNECMA, 75015 Paris (FR)
(72) Inventeur: Goislot, Hervé, 75002, Paris (FR)
(74) Mandataire: Thévenet, Jean-Bruno

(56) Documents cités:
- US-A- 3 074 231
- US-A- 3 742 701
- US-A- 3 897 008
- US-A- 4 782 660

## Description

### Domaine de l'invention

La présente invention concerne un dispositif d'injection de monoergol liquide à forte modulation du débit avec une vitesse d'injection stable, et obturable pour l'extinction et le réallumage, disposé à une extrémité amont de la paroi d'une chambre de combustion d'un moteur-fusée, comprenant un canal d'alimentation en monoergol à partir d'un réservoir.

### Art antérieur

On connaît déjà divers dispositifs d'injection d'ergols liquides pour des moteurs-fusées.

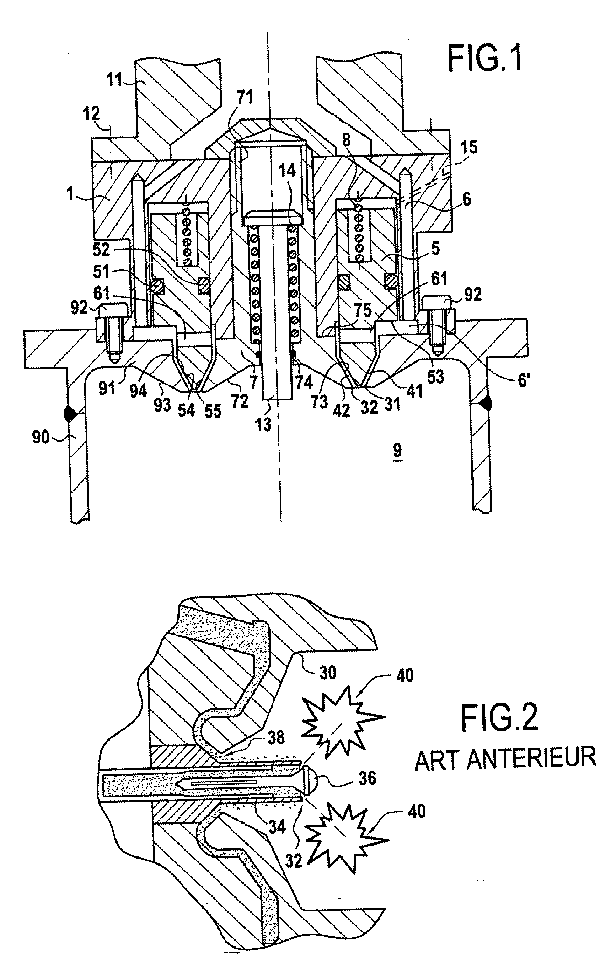

On a représenté à titre d'exemple sur la Figure 2 un dispositif du type « pintle » qui permet, pour l'injection en biergol, une forte modulation du débit du fait de la variation des sections d'injection induite par une pièce mobile 34.

Dans le cas du système de la Figure 2, un oxydant est injecté dans la chambre de combustion 30 à travers un orifice annulaire 32 entre une pièce mobile 34 et une pièce coaxiale fixe 36. Un combustible est par ailleurs injecté à travers un orifice annulaire 38 autour de la pièce mobile 34, entre celle-ci et une portion de la paroi de la chambre de combustion 30. Le combustible et l'oxydant divergent à partir de leurs orifices de sortie respectifs pour former des jets qui se rencontrent et se mélangent dans une zone de combustion annulaire désignée par la référence 40.

La mise en oeuvre de deux systèmes d'alimentation indépendants pour un combustible et un oxydant rend toutefois la réalisation assez complexe et le dispositif ne peut pas être compact, en particulier dans le cas de l'intégration d'une tige d'obturateur.

Dans les dispositifs de l'art antérieur, l'orientation de la résultante des deux nappes est dirigée vers la paroi de la chambre.

Dans les dispositifs d'injection connus de ce type, le mélange et la combustion ont donc tendance à s'effectuer très près de la paroi de la chambre de combustion, ce qui réduit sa durée de vie, ou engendre des diamètres de chambre importants, et peut aussi favoriser le ruissellement de la paroi. De plus, la partie importante en saillie dans la chambre est un élément de fragilité.

Les documents de brevet US-A-3 074 231 et US-A-4 782 660 décrivent des injecteurs pour biergols avec une ouverture annulaire de section variable.

### Définition et objet de l'invention

La présente invention vise à remédier aux inconvénients précités et à permettre de réaliser un dispositif d'injection compact, qui soit adapté à l'injection de monoergol avec extinction, réallumage, qui présente une conception simplifiée et permette une modulation du débit d'injection et une obturation tout en augmentant la durée de vie de la chambre de combustion, et en réduisant les risques de ruissellement à la paroi.

Ces buts sont atteints, conformément à l'invention, grâce à un moteur-fusée comprenant un dispositif d'injection de monoergol liquide à forte modulation du débit avec une vitesse d'injection stable et une chambre de combustion, le dispositif d'injection étant obturable pour extinction et réallumage, disposé à une extrémité amont de la paroi de la chambre de combustion et comprenant au moins un canal d'alimentation en monoergol à partir d'un réservoir, caractérisé en ce qu'il comprend des premier et deuxième canaux annulaires concentriques de mise en vitesse reliés aux canaux d'alimentation et débouchant en sortie respectivement par des première et deuxième sections d'injection annulaire, situées dans un plan sensiblement perpendiculaire à l'axe de la chambre, les premier et deuxième canaux annulaires concentriques étant orientés de façon convergente avec une résultante sensiblement dans l'axe de la chambre en formant un angle prédéfini de manière à créer en sortie deux nappes de monoergol liquide injecté créant un impact entre elles selon une couronne de pulvérisation à une distance prédéterminée de l'extrémité amont formant le fond de la chambre de combustion et au voisinage de l'axe de la chambre de combustion, en ce que le premier canal annulaire de mise en vitesse et la première section d'injection annulaire sont délimités d'une part par une première paroi de révolution fixe située au niveau de ladite extrémité amont et d'autre part par une deuxième paroi de révolution solidaire d'une pièce mobile en translation par rapport à ladite première paroi de révolution fixe, en ce que le deuxième canal annulaire de mise en vitesse et la deuxième section d'injection annulaire sont délimités d'une part par une troisième paroi de révolution fixe située au niveau de ladite extrémité amont et d'autre part par une quatrième paroi de révolution solidaire de ladite pièce mobile en translation par rapport auxdites première et troisième parois de révolution fixes, et en ce que la pièce mobile en translation par rapport aux première et troisième parois de révolution fixes comprend une pluralité d'orifices radiaux pour permettre l'alimentation du deuxième canal de mise en vitesse à partir d'un canal d'alimentation commun alimentant directement le premier canal de mise en vitesse.

La pièce mobile comprend une section pilote soumise aux effets du débit de fluide du monoergol dans le canal d'alimentation et agissant contre l'action d'un élément élastique dimensionné pour un déplacement de la pièce mobile en position d'ouverture lorsqu'un effort prédéterminé est exercé sur la section pilote.

L'élément élastique peut être constitué par un ressort calibré ou par un ensemble de rondelles Belleville.

La présente invention repose sur une technologie basée sur l'association d'un système de modulation de débit d'un monoergol et d'une pulvérisation de celui-ci par l'impact de deux nappes dont la résultante de l'orientation des canaux d'injection est sensiblement dans l'axe de la chambre et sans saillie importante.

Selon un mode particulier de réalisation, les première et deuxième parois de révolution sont tronconiques avec la petite base tournée du côté de la chambre de combustion.

De façon similaire, les troisième et quatrième parois de révolution peuvent être tronconiques avec la grande base tournée du côté de la chambre de combustion.

Selon un mode de réalisation avantageux, des trous d'alimentation en monoergol sont définis par un corps en forme de cloche comprenant une couronne d'appui fixée par des vis sur l'extrémité amont de la paroi de la chambre de combustion et une pluralité de parois cylindriques de guidage coaxiales pour assurer le guidage de la pièce mobile, le positionnement d'une pièce centrale de centrage de la troisième paroi de révolution fixe, et l'étanchéité entre ledit corps et la pièce mobile.

Le dispositif est conçu de manière à permettre l'obtention de sections d'injection régulières sur tout le périmètre et une obturation quasi-parfaite.

Selon un mode de réalisation particulier, la première paroi de révolution fixe est définie par une portion en saillie en forme de lèvre de l'extrémité amont-de la paroi de la chambre de combustion et la troisième paroi de révolution fixe est définie par une portion en saillie en forme de lèvre d'une pièce fixe rapportée sur ladite extrémité amont de la paroi de la chambre de combustion.

D'une manière générale, l'invention permet, pour du monoergol, une modulation du débit d'injection, avec un petit débit à l'allumage et une forte variation ensuite, grâce à une section d'injection variable qui permet une vitesse d'injection relativement stable.

L'injecteur peut être obturé complètement dans le plan d'injection lorsque le débit de monoergol est nul, ce qui évite une combustion dans les cavités de l'injecteur, des résidus de combustion, voire des explosions compte tenu de la nature de certains ergols.

Le système est simple sur le plan mécanique et très compact, avec un seul canal d'alimentation en ergol.

Le fond de la chambre de combustion est peu exposé à d'importantes recirculations du fait de l'orientation "axiale" et sans saillie de l'injection, notamment dans le cas de l'intégration d'une tige d'obturateur.

La pulvérisation s'effectue par projection de l'ergol avec une résultante des axes d'injection de l'ergol qui est orientée au voisinage de l'axe de la chambre, ce qui évite un éventuel ruissellement à la paroi de la chambre de combustion et une altération rapide de celle-ci due à la combustion.

Par ailleurs, le dispositif d'injection est facilement adaptable et une pièce centrale servant à définir une section d'injection peut être facilement interchangeable. De plus, un espace libre au centre du dispositif d'injection permet d'introduire un obturateur de col ou un allumeur par exemple.

Le dispositif selon l'invention est applicable à tout moteur-fusée à forte modulation de poussée et concerne également un tel moteur-fusée équipé du dispositif d'injection selon l'invention.

### Brève description des dessins

D'autres caractéristiques et avantages de la présente invention seront mieux compris à la lecture de la description suivante de modes particuliers de réalisation, faite à titre indicatif et non limitatif, en référence aux dessins, sur lesquels :
- la figure 1 est une vue schématique en coupe axiale d'un dispositif d'injection de monoergol selon un mode particulier de réalisation de l'invention, et
- la Figure 2 est une vue schématique en coupe axiale d'un dispositif connu d'injection de biergol muni d'une pièce mobile pour moduler le débit d'injection d'un ergol.

### Description détaillée de modes de réalisation préférentiels

Si l'on se réfère à la figure 1, on voit une représentation schématique en coupe longitudinale d'un exemple de dispositif d'injection de monoergol selon l'invention.

Sur la figure 1, on a représenté partiellement une chambre de combustion 9 délimitée par une paroi 90 dont une extrémité amont est repérée par la référence 91.

Un corps 1 en forme de cloche comporte une base en forme de couronne qui est fixée sur la paroi de fond 91 par des éléments de liaison 92 tels que des vis. Le corps 1 définit des trous d'alimentation d'ergol liquide qui sont en communication avec un réservoir à travers un espace défini par un deuxième corps 11 fixé par des vis ou boulons 12 sur le corps en cloche 1 et peut comprendre plusieurs canaux en parallèle répartis sur une zone annulaire du corps 1 et débouchant sur un espace annulaire au niveau de la paroi de fond 91.

La paroi 91 de fond de chambre présente une portion en saillie 93 en forme de jupe ou de lèvre qui présente une symétrie de révolution et définit une surface de révolution fixe 94 sur la face tournée vers le canal 41 de mise en vitesse. La surface de révolution fixe 94 présente avantageusement une forme tronconique avec sa petite base tournée vers l'intérieur de la chambre de combustion 9.

Le corps 1 en forme de cloche présente une cavité centrale dans laquelle est insérée une pièce centrale fixe 7 qui peut présenter par exemple une partie tubulaire 71 munie d'un filetage permettant une solidarisation avec le corps 1. La pièce centrale 7 peut présenter un épaulement 75 qui vient en butée contre le corps 1 pour positionner de façon précise la pièce centrale 7 dont la partie tournée vers la chambre 9 comprend une portion en saillie 72 en forme de jupe ou de lèvre qui présente une symétrie de révolution et définit une surface de révolution fixe 73 sur la face tournée vers le canal 41 de mise en vitesse. La surface de révolution fixe 73 présente avantageusement une forme tronconique avec sa grande base tournée vers l'intérieur de la chambre de combustion 9.

Les portions en saillie fixes intérieure 72 et extérieure 93 forment chacune une pointe du côté de leur partie terminale libre qui est située dans un plan sensiblement perpendiculaire à l'axe de la chambre.

Une pièce mobile 5 de forme annulaire est coaxiale à la pièce mobile fixe 7 et à des parties tubulaires cylindriques du corps 1.

La pièce mobile 5 disposée dans un logement annulaire du corps 1 entre deux parties tubulaires de ce corps est guidée en translation selon la direction de l'axe de la chambre 9.

Des joints d'étanchéité 51, 52 sont disposés entre la pièce mobile 5 d'une part et les parois cylindriques des parois tubulaires du corps 1 d'autre part.

Les trous 6 d'alimentation en ergol ou les divers canaux en parallèle sont formés dans la partie tubulaire externe du corps 1.

Des orifices radiaux 61 sont formés dans la pièce mobile 5 pour permettre au monoergol de circuler des deux côtés de la partie aval de la pièce mobile 5.

Une face 53 de la pièce mobile 5 définit une section pilote soumise aux variations de débit d'ergol circulant dans la partie annulaire du canal 6 d'alimentation, ces variations de débit évoluant sensiblement comme la pression.

La face arrière de la pièce mobile 5 est soumise à l'action d'un élément élastique tel qu'un ressort 8 qui est interposé entre le corps fixe 1 et la pièce mobile 5. Un canal 15 assure l'évacuation des fluides parasites vers l'extérieur lors de la montée de la pièce mobile 5.

La partie terminale avant de la pièce mobile 5 qui est tournée vers la chambre de combustion 9 présente deux surfaces de révolution 54, 55 qui présentent avantageusement une forme tronconique.

La surface de révolution 54 constitue une surface tronconique extérieure avec sa petite base tournée vers la chambre de combustion 9 tandis que la surface de révolution 55 constitue une surface tronconique intérieure avec sa grande base tournée vers la chambre de combustion 9 et située, comme la petite base de la surface tronconique 54, dans un plan sensiblement perpendiculaire à l'axe de la chambre de combustion.

Un premier canal annulaire 41 de mise en vitesse relié directement aux canaux d'alimentation 6 et débouchant en sortie par une première section d'injection annulaire 31 est délimité par la surface de révolution fixe 94 et par la surface de révolution mobile 54.

De façon similaire, un deuxième canal annulaire 42 de mise en vitesse relié aux canaux d'alimentation 6 par l'intermédiaire des orifices 61, et débouchant en sortie par une deuxième section d'injection annulaire 32 est délimité par la surface de révolution fixe 73 et par la surface de révolution mobile 55.

Le ressort 8 est dimensionné de manière à pousser la pièce mobile 5 en position de fermeture des sections d'injection d'ergol 31, 32 dans le plan de sortie de l'injecteur lorsque le débit de monoergol est nul, et à provoquer l'ouverture de ces sections 31, 32 d'injection d'ergol lorsque le débit d'ergol agissant sur la section pilote 53 produit un effet prédéterminé sur le ressort 8.

La pièce centrale 7, qui est démontable, confère une modularité qui permet une adaptation de la forme et de l'angle d'inclinaison de la surface de révolution intérieure fixe 73.

A la sortie des canaux concentriques de mise en vitesse 41, 42 orientés de façon convergente en formant un angle prédéfini, le monoergol éjecté par les sections de sortie 31, 32 concentriques se présente sous la forme de deux nappes qui vont créer entre elles un impact selon une couronne de pulvérisation à une distance prédéterminée de l'extrémité amont 91 formant le fond de la chambre de combustion et au voisinage de l'axe de la chambre de combustion.

Les effets sur la section pilote 53 de la variation de débit qui évolue sensiblement comme la pression commandent la translation de la pièce mobile 5 qui induit elle-même une variation des première et deuxième sections d'injection annulaire 31, 32.

Le fluide circulant dans le canal d'alimentation 6 alimente le premier canal de mise en vitesse 41 et, par les orifices 61, le deuxième canal de mise en vitesse 42, les premier et deuxième canaux de mise en vitesse 41, 44 formant un angle prédéfini pour définir deux nappes annulaires d'ergol liquide injecté et un impact de qualité entre ces deux nappes injectées provoquant la pulvérisation au niveau de cet impact.

La résultante des premier et deuxième canaux de mise en vitesse 41, 42 est orientée parallèlement à l'axe de ia chambre de combustion 9 ou même légèrement vers le centre de cette chambre.

L'impact des deux nappes se fait sur une couronne et à distance du fond 91 de la chambre avec une résultante dans l'axe de la chambre et en limitant les recirculations.

Le corps 1 en forme de cloche est usiné en une seule phase avec notamment une partie tubulaire centrale qui sert à positionner la pièce centrale 7 de centrage et à guider la pièce 5 mobile en translation parallèlement à l'axe de la chambre 9.

Compte tenu de l'hyperstaticité du système, une bonne concentricité est garantie pour assurer à la fois :
- le guidage de la pièce mobile 5,
- l'étanchéité avec la surface extérieure de la pièce mobile 5,
- le centrage long de la pièce 7 de centrage de la lèvre intérieure 72 qui contribue à définir le canal intérieur 42 de mise en vitesse, en coopération avec la pièce mobile 5,
- le centrage court du corps 1 et l'appui plan de la couronne de base de ce corps 1 sur la plaque de fond de la chambre 91 qui, par sa partie en saillie 93, contribue à définir le canal extérieur 41 de mise en vitesse, en coopération avec la pièce mobile 5.

Le fait de minimiser l'empilage des pièces et de réaliser l'usinage de cylindres longs dans une même phase est une garantie de bon fonctionnement.

Par ailleurs, le fait que l'extrémité libre de la pièce mobile 5 soit relativement fine permet de minimiser les effets de pression de la chambre 9 sur le ressort 8 ou un élément élastique équivalent tel qu'un empilement de rondelles Belleville.

On a représenté sur la Figure 1 une tige centrale 13 qui est mobile axialement sous l'action d'un ressort 14 et peut servir par exemple à commander l'obturation sélective du col de la chambre de combustion 9. Dans ce cas, la pièce 7 de centrage qui est insérée dans le corps 1 et solidaire de celui-ci comprend une portion 74 qui assure un premier guidage court de la tige centrale mobile 13 par rapport au corps fixe 1. Un autre guidage court est situé dans la chambre de combustion, pour constituer un guidage long en combinaison avec le premier guidage court.

Au centre de l'injecteur, à la place de la tige d'obturateur, il peut être implanté un allumeur.

Naturellement, diverses modifications et adjonctions peuvent être apportées sans sortir du cadre de la présente invention.

Ainsi, par exemple, la paroi de fond de chambre 91 de même que la paroi latérale 90 de la chambre 9 peuvent comporter un revêtement de protection, non représenté sur la Figure 1.

Le dispositif est également adaptable à un pilotage en force. Dans ce cas, la section pilote 53 et le ressort 8 sont supprimés et la pièce mobile 5 est couplée à un actionneur, par exemple de type mécanique, hydraulique ou électrique, par l'intermédiaire d'une pluralité de tiges qui passent au travers du corps 1, en fond de gorge, par une pluralité de trous.

Dans la présente description, de façon classique, on entend par organe de centrage court un organe définissant une zone de contact qui peut se modéliser comme une liaison sphère-cylindre.

Si la longueur de la zone de contact est L et si le diamètre de l'organe de centrage court est D, on a une relation du type L ≤ 0,8D.

De préférence, on peut choisir la valeur de la longueur L de la zone de contact dans la plage de valeurs suivantes : 0,1D ≤ L ≤ 0,5D.

De façon encore plus préférentielle on peut choisir la valeur de la longueur L de la zone de contact dans la plage de valeurs suivantes : 0,1D ≤ L ≤ 0,3D.

Par ailleurs, également de façon classique, on entend par organe de centrage long un organe définissant une zone de contact qui peut se modéliser comme une liaison à pivot glissant.

Si la longueur de la zone de contact est L et si le diamètre de l'organe de centrage long est D, on a une relation du type D ≤ L.

De préférence, on peut choisir la valeur de la longueur L de la zone de contact dans la plage de valeurs suivantes : 1,5D ≤ L.

## Revendications

1. Moteur-fusée comprenant un dispositif d'injection de monoergol liquide à forte modulation du débit avec une vitesse d'injection stable et une chambre de combustion, le dispositif d'injection étant obturable pour extinction et réallumage, disposé à une extrémité amont (91) de la paroi (90) de la chambre de combustion (9) et comprenant au moins un canal (6') d'alimentation en monoergol à partir d'un réservoir, **caractérisé en ce qu'**il comprend des premier et deuxième canaux annulaires concentriques (41 ; 42) de mise en vitesse reliés aux canaux d'alimentation (6, 6') et débouchant en sortie respectivement par des première et deuxième sections d'injection annulaire (31 ; 32), situées dans un plan sensiblement perpendiculaire à l'axe de la chambre, les premier et deuxième canaux annulaires concentriques (41, 42) étant orientés de façon convergente avec une résultante sensiblement dans l'axe de la chambre en formant un angle prédéfini de manière à créer en sortie deux nappes de monoergol liquide injecté créant un impact entre elles selon une couronne de pulvérisation à une distance prédéterminée de l'extrémité amont (91) formant le fond de la chambre de combustion (9) et au voisinage de l'axe de la chambre de combustion (9), **en ce que** le premier canal annulaire de mise en vitesse (41) et la première section d'injection annulaire (31) sont délimités d'une part par une première paroi de révolution fixe (94) située au niveau de ladite extrémité amont (91) et d'autre part par une deuxième paroi de révolution (54) solidaire d'une pièce (5) mobile en translation par rapport à ladite première paroi de révolution fixe (94), **en ce que** le deuxième canal annulaire de mise en vitesse (42) et la deuxième section d'injection annulaire (32) sont délimités d'une part par une troisième paroi de révolution fixe (73) située au niveau de ladite extrémité amont (91) et d'autre part par une quatrième paroi (55) de révolution solidaire de ladite pièce mobile (5) en translation par rapport auxdites première et troisième parois de révolution fixes (94, 73), et **en ce que** la pièce (5) mobile en translation par rapport aux première et troisième parois de révolution fixes (94, 73) comprend une pluralité d'orifices radiaux (61) pour permettre l'alimentation du deuxième canal (42) de mise en vitesse à partir d'un canal d'alimentation (6) commun alimentant directement le premier canal (41) de mise en vitesse.

2. Moteur-fusée selon la revendication 1, **caractérisé en ce que** la pièce mobile (5) comprend une section pilote (53) soumise aux effets du débit de fluide du monoergol dans le canal d'alimentation (6) et agissant contre l'action d'un élément élastique (8) dimensionné pour un déplacement de la pièce mobile (5) en position d'ouverture lorsqu'un effort prédéterminé est exercé sur la section pilote (53).

3. Moteur-fusée selon la revendication 2, **caractérisé en ce que** l'élément élastique est constitué par un ressort calibré (8) ou par un ensemble de rondelles Belleville.

4. Moteur-fusée selon l'une quelconque des revendications 1 à 3, **caractérisé en ce que** les première et deuxième parois de révolution (94, 54) sont tronconiques avec la petite base tournée du côté de la chambre de combustion (9).

5. Moteur-fusée selon l'une quelconque des revendications 1 à 4, **caractérisé en ce que** les troisième et quatrième parois de révolution (73, 55) sont tronconiques avec la grande base tournée du côté de la chambre de combustion (9).

6. Moteur-fusée selon l'une quelconque des revendications 1 à 5, **caractérisé en ce que** des trous (6) d'alimentation en monoergol sont définis par un corps (1) en forme de cloche comprenant une couronne d'appui fixée par des vis (92) sur l'extrémité amont (91) de la paroi (90) de la chambre de combustion (9) et une pluralité de parois cylindriques de guidage coaxiales pour assurer le guidage de la pièce mobile (5), le positionnement d'une pièce centrale (7) de centrage de la troisième paroi de révolution fixe et l'étanchéité entre ledit corps (1) et la pièce mobile (5).

7. Moteur-fusée selon l'une quelconque des revendications 1 à 6, **caractérisé en ce que** la première paroi de révolution fixe (94) est définie par une portion en saillie en forme de lèvre de l'extrémité amont (91) de la paroi (90) de la chambre de combustion (9) et la troisième paroi de révolution fixe (73) est définie par une portion en saillie en forme de lèvre d'une pièce fixe (7) rapportée sur ladite extrémité amont (91) de la paroi (90) de la chambre de combustion (9).

8. Moteur-fusée selon la revendication 1, **caractérisé en ce que** la pièce mobile (5) est couplée à un actionneur par l'intermédiaire d'une pluralité de tiges qui passent au travers du corps (1), en fond de gorge, par une pluralité de trous.

## Claims

1. A rocket engine comprising a device for injecting a liquid mono-propellant with a high degree of flow rate modulation and an injection speed that is stable and a combustion chamber, the device being closable for extinction and re-ignition purposes, being disposed at an upstream end (91) of the wall (90) of the combustion chamber (9), and including at least one feed channel (6') for feeding mono-propellant from a tank, **characterized in that**:
the device includes first and second concentric annular speed-up channels (41 ; 42) connected to the feed channels (6, 6') and having outlets opening out respectively via first and second annular injection sections (31 ; 32) that are situated in a plane that is substantially perpendicular to the axis of the chamber, the first and second concentric annular channels (41, 42) being oriented to converge towards each other with a resultant that lies substantially along the axis of the chamber, forming a predefined angle so as to output two sheets of injected liquid mono-propellant that impact against each other in an atomization ring at a predetermined distance from the upstream end (91) forming the end wall of the combustion chamber (9) and in the vicinity of the axis of the combustion chamber (9); **in that**
the first annular speed-up channel (41) and the first annular injection section (31) are defined firstly by a first wall (94) forming a stationary surface of revolution situated level with said upstream end (91) and secondly by a second wall (54) forming a surface of revolution secured to a part (5) that is movable in translation relative to said first wall (94) forming a stationary surface of revolution; **in that**
the second annular speed-up channel (42) and the second annular injection section (32) are defined firstly by a third wall (73) forming a stationary surface of revolution situated at the level of said upstream end (91) and secondly by a fourth wall (55) forming a surface of revolution secured to said part (5) that is movable in translation relative to said first and third walls (94, 73) forming stationary surfaces of revolution; and **in that**
the part (5) that is movable in translation relative to the first and third walls (94, 73) forming stationary surfaces of revolution has a plurality of radial orifices (61) to enable the second speed-up channel (42) to be fed from a common feed channel (6) that feeds the first speed-up channel (41) directly.

2. A rocket engine according to claim 1, **characterized in that** the movable part (5) includes a pilot section (53) subjected to the effects of the fluid flow rate of the mono-propellant in the feed channel (6) and acting against the action of a resilient element (8) dimensioned to move the movable part (5) into an open position when a predetermined force is exerted on the pilot section (53).

3. A rocket engine according to claim 2, **characterized in that** the resilient element is constituted by a calibrated spring (8) or by a set of spring washers.

4. A rocket engine according to anyone of claims 1 to 3, **characterized in that** the first and second walls (94, 54) form surfaces of revolution that are frustoconical with their small bases directed towards the combustion chamber (9) .

5. A rocket engine according to anyone of claims 1 to 4, **characterized in that** the third and fourth walls (73, 55) form surfaces of revolution that are frustoconical with their large bases directed towards the combustion chamber (9).

6. A rocket-engine according to anyone of claims 1 to 5, **characterized in that** the mono-propellant feed holes (6) are defined by a bell-shaped body (1) having a bearing flange fastened by bolts (92) on the upstream end (91) of the wall (9) of the combustion chamber (9), and a plurality of coaxial cylindrical guide walls for: guiding the movable part (5); positioning a central part (7) for centering the third wall constituting a stationary surface of revolution; and providing sealing between said body (1) and the movable part (5).

7. A rocket-engine according to anyone of claims 1 to 6, wherein the first wall (94) constituting a stationary surface of revolution is defined by a portion in the form of a lip projecting from the upstream end (91) of the wall (90) of the combustion chamber (9), and the third wall (73) constituting a stationary surface of revolution is defined by a portion in the form of a lip projecting from a stationary part (7) fitted to said upstream end (91) of the wall (90) of the combustion chamber (9).

8. A rocket engine according to claim 1, **characterized in that** the movable part (5) is coupled to an actuator via a plurality of rods passing through the body (1), in the bottom of the groove, via a plurality of holes.

## Patentansprüche

1. Raketentriebwerk, umfassend eine Vorrichtung zum Einspritzen von flüssigem Monergol mit hoher Modulation des Durchflusses mit einer stabilen Einspritzgeschwindigkeit, sowie eine Brennkammer, wobei die Einspritzvorrichtung durch Abschalten und Wiederzünden verschließbar ist, an einem stromaufwärtigen Ende (91) der Wand (90) der Brennkammer (9) angeordnet ist und wenigstens einen Kanal (6') zum Zuführen von Monergol aus einem Behälter umfaßt, **dadurch gekennzeichnet, daß** sie erste und zweite ringförmige, konzentrische Beschleunigungskanäle (41; 42) umfaßt, die mit den Zuführkanälen (6, 6') verbunden sind und ausgangsseitig über einen ersten bzw. einen zweiten ringförmigen Einspritzquerschnitt (31; 32), die in einer zu der Achse der Kammer im wesentlichen senkrechten Ebene liegen, ausmünden, wobei die ersten und zweiten ringförmigen, konzentrischen Kanäle (41, 42) - mit einer Resultierenden im wesentlichen in der Achse der Kammer, unter Bildung eines vordefinierten Winkels - konvergierend ausgerichtet sind, so daß am Ausgang zwei Mäntel von eingespritztem flüssigem Monergol erzeugt werden, die zwischen sich, entlang eines Zerstäubungskranzes, in einem vorbestimmten Abstand von dem den Boden der Brennkammer (9) bildenden stromaufwärtigen Ende (91) und in der Nähe der Achse der Brennkammer (9) ein Auftreffen bewirken, daß der erste ringförmige Beschleunigungskanal (41) und der erste ringförmige Einspritzquerschnitt (31) einerseits durch eine erste feste Rotationswand (94), die im Bereich des stromaufwärtigen Endes (91) liegt, und andererseits durch eine zweite Rotationswand (54), die mit einem Teil (5), das gegenüber der ersten festen Rotationswand (94) verschiebebeweglich ist, fest verbunden ist, begrenzt sind, daß der zweite ringförmige Beschleunigungskanal (42) und der zweite ringförmige Einspritzquerschnitt (32) einerseits durch eine dritte feste Rotationswand (73), die im Bereich des stromaufwärtigen Endes (91) gelegen ist, und andererseits durch eine vierte Rotationswand (55), die mit dem Teil (5), das gegenüber der ersten und der dritten festen Rotationswand (94, 73) verschiebebeweglich ist, fest verbunden ist, begrenzt sind, und daß das Teil (5), das gegenüber der ersten und der dritten festen Rotationswand (94, 73) verschiebebeweglich ist, eine Vielzahl von radialen Öffnungen (61) umfaßt, um die Beaufschlagung des zweiten Beschleunigungskanals (42) mittels eines gemeinsamen Zuführkanals (6), der den ersten Beschleunigungskanal (41) direkt versorgt, zu ermöglichen.

2. Raketentriebwerk nach Anspruch 1, **dadurch gekennzeichnet, daß** das bewegliche Teil (5) einen Steuerabschnitt (53) umfaßt, der den Wirkungen des Fluiddurchflusses des Monergols in dem Zuführkanal (6) ausgesetzt ist und der der Wirkung eines Federelements (8), das für ein Bewegen des beweglichen Teils (5) in die Öffnungsstellung, wenn eine vorbestimmte Kraft auf den Steuerabschnitt (53) ausgeübt wird, dimensioniert ist, entgegenwirkt.

3. Raketentriebwerk nach Anspruch 2, **dadurch gekennzeichnet, daß** das Federelement von einer kalibrierten Feder (8) oder von einer Tellerfederanordnung gebildet ist.

4. Raketentriebwerk nach einem der Ansprüche 1 bis 3, **dadurch gekennzeichnet, daß** die erste und die zweite Rotationswand (94, 54) kegelstumpfförmig sind, wobei die kleine Grundfläche auf der Seite der Brennkammer (9) gelegen ist.

5. Raketentriebwerk nach einem der Ansprüche 1 bis 4, **dadurch gekennzeichnet, daß** die dritte und die vierte Rotationswand (73, 55) kegelstumpfförmig sind, wobei die große Grundfläche auf der Seite der Brennkammer (9) gelegen ist.

6. Raketentriebwerk nach einem der Ansprüche 1 bis 5, **dadurch gekennzeichnet, daß** Löcher (6) zum Zuführen von Monergol von einem glockenförmigen Körper (1) definiert sind, der einen Auflagekranz, welcher mittels Schrauben (92) an dem stromaufwärtigen Ende (91) der Wand (90) der Brennkammer (9) befestigt ist, sowie eine Vielzahl von zylindrischen, koaxialen Führungswänden umfaßt, um die Führung des beweglichen Teils (5), die Positionierung eines mittleren Teils (7) zum Zentrieren der dritten festen Rotationswand und die Dichtigkeit zwischen dem Körper (1) und dem beweglichen Teil (5) sicherzustellen.

7. Raketentriebwerk nach einem der Ansprüche 1 bis 6, **dadurch gekennzeichnet, daß** die erste feste Rotationswand (94) von einem vorspringenden lippenförmigen Abschnitt des stromaufwärtigen Endes (91) der Wand (90) der Brennkammer (9) definiert ist und die dritte feste Rotationswand (73) von einem vorspringenden lippenförmigen Abschnitt eines festen Teils (7), das an das stromaufwärtige Ende (91) der Wand (90) der Brennkammer (9) angesetzt ist, definiert ist.

8. Raketentriebwerk nach Anspruch 1, **dadurch gekennzeichnet, daß** das bewegliche Teil (5) mittels einer Vielzahl von Stangen, die den Körper (1), am Nutgrund, über eine Vielzahl von Löchern durchgreifen, mit einem Stellglied gekoppelt ist.
